# EUROPEAN PATENT APPLICATION

(11) **EP 1 734 425 A2**
(43) Date of publication of application: **20.12.2006**
(21) Application number: 06011663.9
(22) Date of filing: 06.06.2006
(51) Int. Cl.: G05B 19/042

(54) **Robot controller**

(30) Priority: 10.06.2005 JP 2005171052
(71) Applicant: FANUC LTD, Minamitsuru-gun, Yamanashi 401-0597 (JP)
(72) Inventor: Hashimoto, Yoshiki, Kanagawa 257-00025 (JP); Kubo, Yoshiyuki, c/o FANUC Manshonharimoi, Minamitsuru-gun Yamanashi 401-0511 (JP); Sera, Takehisa, Minamitsuru-gun, Yamanashi 401-0511 (JP)
(74) Representative: Thum, Bernhard

(57) **Abstract**

A robot controller having a function for controlling the motion of a robot, comprising a processor for controlling the robot and for processing the environmental condition data representing the environmental conditions for the robot, a memory accessible by the processor, a writing unit for executing a function of writing the environmental condition into the memory, a first data bus connected to the memory, and a second data bus having a transfer rate lower than that of the first data bus and for transferring the control data used for controlling the robot, wherein the writing unit writes the environmental condition data into the memory through the first data bus, not through the second data bus. The writing unit can be a processor control chip which is connected to the processor through the first data bus.

## Description

### BACKGROUND OF THE INVENTION

### Field of the Invention

The present invention relates to a robot controller having a function for controlling the motion of a robot by processing data picked up by detection means such as a camera or a force sensor that detects the environmental conditions for the robot.

### Description of the Related Art

There has heretofore been known a robot controller incorporating an image-processing function as the robot controller having a function for correcting the motion of the robot that is taught by processing environmental condition data that represents the environmental conditions for the robot.

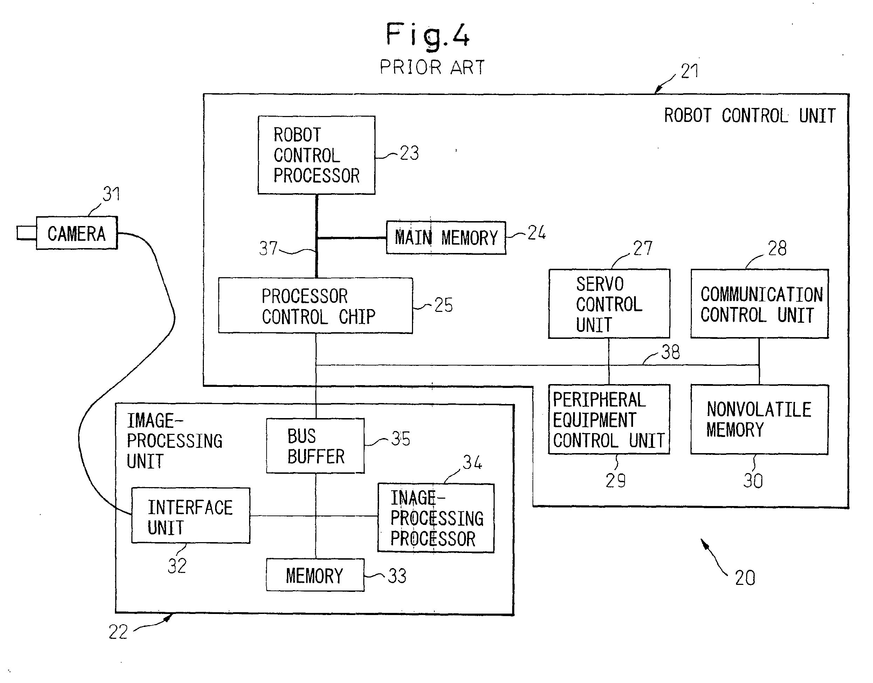

Fig. 4 illustrates a conventional robot controller incorporating an image-processing function. The robot controller 20 includes a robot control unit 21 and an image-processing unit 22. The robot control unit 21 includes a robot control processor 23 for controlling the position/attitude of a robot, and which is not shown, a main memory 24 for storing the program and data, a servo control unit 27 for controlling a servo amplifier, which is not shown, upon receiving instructions from the processor 23, a communication control unit 28 for controlling the communication such as Ethernet (registered trademark) and Device net or communication with a teaching operator panel (not shown), a communication control unit 28, a peripheral equipment control unit 29 for controlling I/O, and a nonvolatile memory 30 for storing system programs and teach programs executed by the processor.

The robot control processor 23 reads the operation program from the main memory 24, and writes, in the main memory 24, the data and addresses that are to be temporarily stored. To increase the processing speed of the processor 23, the main memory 24 used by the processor 23 is connected to a first data bus 37 which is accessible at high speeds from the processor 23. An increase in the number of devices connected to the first data bus 37 results in an increase in the load on the bus, lowering the upper limit of operation frequency and depriving the bus of high-speed performance. Therefore, the main memory 24 only is connected to the first data bus 37. The devices 27, ---, 30 are connected to a second data bus 38. A processor control chip 25 is connected to both the first data bus 37 and the second data bus 38.

Access to the second data bus 38 from the robot control processor 23 is controlled by the processor control chip 25. The amount of data flowing through the second data bus 38 is usually smaller than that through the first data bus 37. Therefore, performance is affected little even if the transfer rate through the second data bus 38 is lower than through the first data bus 37. Thus, many devices are connected to the second data bus 38. Further, the constitution that is shown makes it possible to exchange the data among the devices 27, ---, 30 that are connected to the second data bus 38 without interrupting the operation of the first data bus 37. For example, it is possible to execute the processing of transmitting the input signals received from an external unit to the peripheral equipment control unit 29 by using the communication control unit 28 without interrupting the first data bus 37. Therefore, the data can be transferred without imposing a burden on the robot control processor 23.

As for the transfer rate through the first data bus 37 and the second data bus 38, let it be assumed that the first data bus 37 has a bus width of 64 bits, a operating frequency of 100 MHz and the second data bus 38 has a bus width of 16 bits, and an operating frequency of 30 MHz. Then, the transfer rates through the first and second data buses 37 and 38 become 800 MBytes/sec and 60 MBytes/sec, creating a thirteen-fold difference in speed between the two buses. Also, when the processor 23 has a cache memory therein, the processing is executed while taking the data into the cache memory. Therefore, the processing speed is heightened more than the difference in the transfer rate.

The image-processing unit 22 connected to the second data bus 38 has a camera interface unit 32 to which a camera 31 is connected, a memory 33 for storing image data detected by the camera 31, a processor 34 for processing image data upon accessing the memory 33 and for specifying the position of an object work, and a bus buffer 35 for isolating the bus in the image-processing unit from the second data bus 38.

The image data of the object work are detected by a camera 31, are transferred to the memory 33 through the camera interface unit 32, are processed by the image-processing processor 34, and the results thereof are transferred to the robot control processor 23 through the second data bus 38. Therefore, the program teach points of the object work are corrected, enabling the robot hand to reliably grip the object work. The above conventional robot controller is disclosed in, for example, JP-A-2000-135689.

In the case of the above constitution, the image data picked up through the camera 31 are processed in the image-processing unit 22. Therefore, the image can be processed without imposing a burden on the robot control processor 23. Further, no image data flows through the data buses 37 and 38, and hence the operation for controlling the robot is not hindered by the transfer of image data.

However, provision of the robot controller 20 with the image-processing unit 22 separately from the robot control unit 21 is accompanied by the problem of an increase in the cost of the robot controller 20.

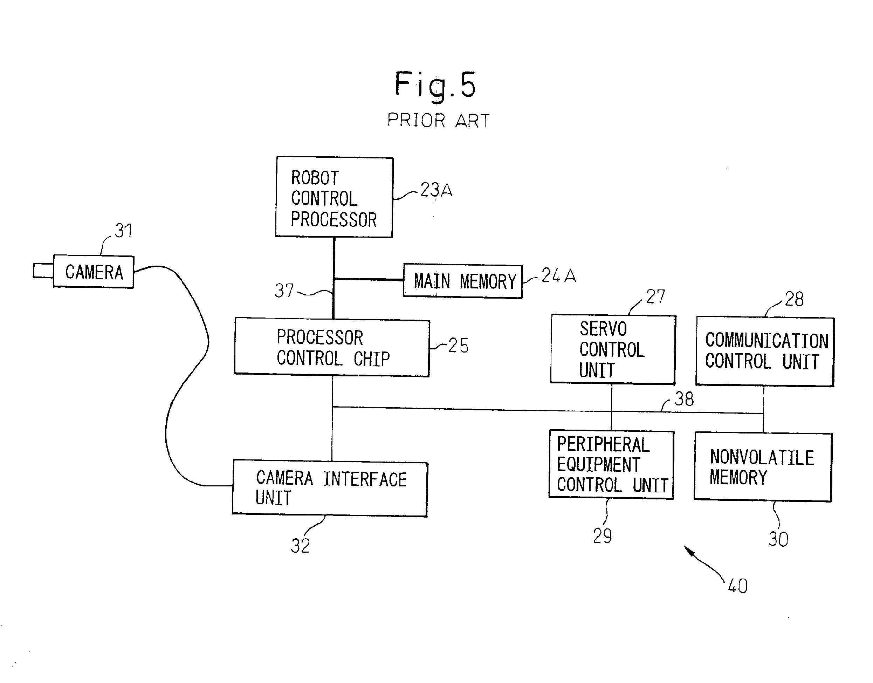

Next, according to another conventional robot controller, the robot control processor is used for controlling the robot and for processing images. In this conventional example as shown in Fig. 5, a robot control processor 23A controls the robot and, at the same time, processes the images. The image data from a camera 31 are taken in through a camera interface unit 32, and are transferred to a main memory 24A through a second data bus 38 and a first data bus 37. The image data can be transferred even by using another processor connected to the second data bus 38 other than the robot control processor 23A or by using DMA (direct memory access). The main memory 24A is accessed by the robot control processor 23A at a high speed to process the image.

The above conventional example requires neither the image-processing processor nor the image-processing memory, offering the advantage of lowering the cost of a robot controller 40.

However, the image data picked up through the camera 31 are transferred up to the main memory 24A through the second data bus 38. Therefore, not only the data of the devices 27, ---, 30 but also the image data flow through the second data bus 38; i.e., the data of increased amounts flow through the second data bus 38, which may cause the occurrence of collision and traffic congestion on the second data bus 38, thus hindering to hinder the operation for controlling the robot. For example, considered below is a case of transmitting 30 pieces of images per second, each image having 640 x 480 dots and being monochromatic data of 8 bits per dot. In this case, the amount of data per second is 9 MBytes/sec accounting for about 15% of the transfer ability of the bus if the second data bus 38 has a transfer rate of 60 MBytes/sec. Therefore, the effect on the data flowing through the second data bus 38 is no longer negligible, and it becomes highly probable that the transfer of data will be hindered. The above conventional example can be represented by a robot controller disclosed in, for example, JP-A-2001-191285. In the robot controller described in the above JP-A-2001-191285, not only the processor and the memory but also such devices as the servo control unit and the external equipment connection units are all connected to one bus. Therefore, the load on the bus increases, making it difficult to increase the transfer rate of the bus. In addition, large amounts of image data are transferred through the same bus as that of the robot control data, which hinders the transfer of data for controlling the robot.

As described above, the conventional example (Fig. 4) is capable of processing images without imposing a burden on the robot control processor, but is provided with a processor for processing images separately from the robot control processor, raising the problem of increased cost of the robot controller as a whole.

According to another conventional example (Fig. 5), an image-processing function is incorporated in the robot controller at a lower cost than that of the constitution of Fig. 4, but the transfer of image data hinders the operation for controlling the robot.

### SUMMARY OF THE INVENTION

It is an object of the present invention to provide a robot controller capable of transferring the environmental condition data picked up by detection means to a memory at high speeds without hindering the operation for controlling the robot.

To achieve the above object according to the present invention, there is provided a robot controller having a function for controlling the motion of a robot, comprising:
a processor for controlling the robot and for processing the environmental condition data representing the environmental conditions for the robot;
a memory accessible by the processor;
a writing unit for executing a function of writing the environmental condition into the memory;
a first data bus connected to the memory; and
a second data bus having a transfer rate lower than that of the first data bus and for transferring the control data used for controlling the robot;
wherein the writing unit writes the environmental condition data into the memory through the first data bus, not through the second data bus.

According to the present invention, the environmental condition data are written by the writing unit into the memory through the first data bus, thereby avoiding a collision between the environmental condition data and the control data flowing through the second data bus and, hence, permitting the environmental condition data that are picked up to be transferred to the memory at a high speed without hindering the operation for controlling the robot.

Here, the above writing unit may be a processor control chip which is connected to the processor through the first data bus.

According to this technological aspect, the environmental condition data can be transferred to the memory by the processor control chip, which is the writing unit through the first data bus which is controlled. Therefore, the image data can be processed at a high speed.

Further, the control data may at least include servo control data. According to this technological aspect, the servo control data for controlling the joints of the robot upon receiving instructions from the processor are not affected by the environmental condition data. Therefore, the operation for controlling the joints of the robot is not hindered.

Further, the control data may include peripheral equipment control data. According to this technological aspect, the peripheral equipment control data for controlling the opening/closing of a robot hand are not affected by the environmental condition data. Therefore, the operation for controlling the opening/closing of the robot hand is not hindered. Further, the environmental condition data may be image data picked up by the camera. According to this technological aspect, the image data having a large data capacity picked up by the camera can be transferred to the memory through the first data bus which features a speed higher than that of the second data bus. Therefore, the second data bus of a low speed is not occupied with processing the image data having a large data capacity, and the operation for controlling the robot is not hindered.

Further, the environmental condition data may be the data output from a force sensor. According to this technological aspect, the output data picked up by the force sensor can be written into the memory at a high speed making it possible to process the control data based on the output data of the force sensor and to efficiently control the position/attitude of the robot.

### BRIEF DESCRIPTION OF THE DRAWINGS

The above and other objects, features and advantages of the invention will become more obvious from the description of the following preferred embodiment in conjunction with the accompanying drawings in which:
Fig. 1 is a block diagram illustrating an embodiment of a robot controller according to the present invention;
Fig. 2 is a diagram illustrating a processor control chip of Fig. 1 in detail;
Fig. 3 is a block diagram illustrating a modified example of the robot controller shown in Fig. 1;
Fig. 4 is a block diagram illustrating a conventional robot controller; and
Fig. 5 is a block diagram illustrating another conventional robot controller.

### DETAILED DESCRIPTION OF THE INVENTION

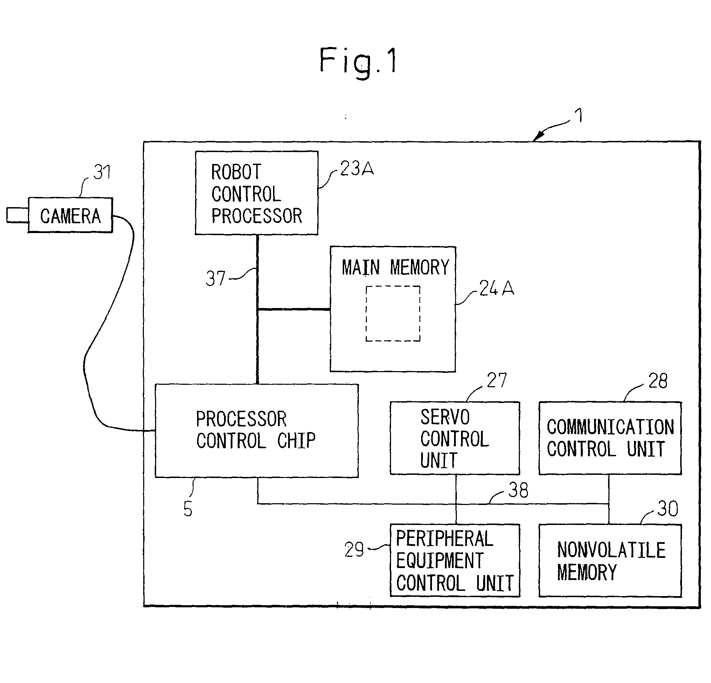

Fig. 1 is a block diagram illustrating an embodiment of a robot controller according to the present invention. The robot controller 1 includes a robot control processor 23A, a main memory 24A directly accessible by the robot control processor 23A, a high-speed CPU external bus (first data bus) 37 connected to the main memory 24A, a second data bus 38 having a transfer rate lower than that of the CPU external bus 37 and used for transferring the control data for controlling the robot, and a processor control chip 5 connected to the robot control processor 23A through the CPU external bus 37. A CCD camera 31 is connected to the processor control chip 5 to detect or recognize the environmental conditions for the robot. The environmental conditions for the robot represent a relative positional relationship between the robot and an object work before and after being clamped. The CCD camera 31 in this embodiment is used for detecting the position of the object work before being clamped.

The robot controller 1 is constituted in nearly the same manner as that of the prior art of Fig. 5, except that the CCD camera 31 is connected to the processor control chip 5. Hereinafter, the constituent portions overlapping those of the prior art are denoted by the same reference numerals but are not described here again, and different portions only will be described.

The robot control processor 23A has a function for controlling the position/attitude of a multi-joint robot, which is not shown, as well as a function for processing the image data of an object work picked up by the CCD camera 31 based on the control data flowing through the second data bus 38. That is, the robot control processor 23A of this embodiment is capable of executing the robot control and the image processing by using a single processor.

The main memory 24A accessible by the robot control processor 23A at a high speed may be, for example, an SDRAM. The main memory 24A temporarily stores the operation program for operating the robot and the data, and, further, stores the image data (environmental condition data) detected by the CCD camera 31. The operation program and data that are stored, are read out upon being accessed by the robot control processor 23A. As the operation program and the like that are read out accumulate in the cache memory in the processor 23A, the image processing is executed at a higher speed.

The high-speed CPU external bus 37 and the second data bus 38 are connected to the processor control chip 5. For example, let it be assumed that the CPU external bus 37 has a bus width of 64 bits and clocks of 100 MHz and the second data bus 38 has a bus width of 16 bits and clocks 30 MHz. In this case, the transfer rate of the CPU external bus 37 becomes 800 MBytes/sec and the transfer rate of the second data bus 38 becomes 60 MBytes/sec. When an image of 640 x480 dots is to be transferred at a rate of 30 pieces per second with monochromatic data of 8 bits per dot, the amount of data per second becomes 9 MBytes/sec.

In transferring the data at a transfer rate of 9 MBytes/sec, a ratio of the CPU external bus 37 occupied by the data can be compared to a ratio of the second data bus 38 occupied by the data to be that the ratio of the CPU external bus 37 occupied by the data is about 1%, while the ratio of the second data bus 38 occupied by the data is about 15%. The CPU external bus 37 transfers the data in a relatively small amount and affects the transfer of other data very little. The second data bus 38, on the other hand, transfers the data in relatively large amounts and may affect the transfer of other data. In the present invention, however, the image data picked up by the CCD camera 31 flow through the CPU external bus 37 of a wide bus width and are likely to affect the transfer of other data very little, and the operation for controlling the robot is not hindered.

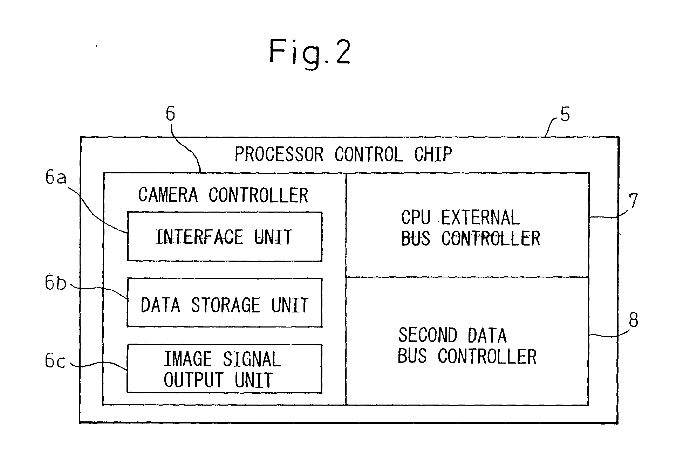

Referring to Fig. 2, the processor control chip 5 includes bus controllers such as a CPU external bus controller 7 and a second data bus controller 8, as well as a camera controller 6. The bus controllers 7 and 8 control the data flowing through the buses of different specifications.

Devices connected to the second data bus 38 include, for example, servo control unit 27, communication control unit 28, peripheral equipment control unit 29, non-volatile memory 30 and the like (Fig. 1).

The servo control unit 27 receives an instruction from the robot control processor 23A, sends an instruction to a servo amplifier, which is not shown, and controls a current flowing into servo motors for moving the joints of the robot. The communication control unit 28 controls the network communication such as Ethernet (registered trademark) and a Device net, and controls the communication to a teaching operation panel, which is not shown. The peripheral equipment control unit 29 controls ON/OFF of the lamp and the open/close signals of the robot hand. The non-volatile memory 30 stores the data which are not erased even when the power source of the robot is turned off, and stores system programs and teach programs executed by, for example, the processor. The teaching operation panel includes a key input device for inputting teach data through the key operation, a display unit for displaying various data of the robot and a CPU for controlling them.

Referring to Fig. 2, the camera controller 6 receives the image data from the CCD camera which is a vision sensor, send the image data that are received to the CPU external bus controller 7, and transfers the image data to the main memory 24A, and is equipped with an interface unit 6a and a data storage unit 6b. The interface unit 6a has a function for converting the image data received from the camera 31 into a form that is handled by the processor 23A. In the case of analog data, the interface unit 6a works as an interface circuit including an analog/digital converter. In the case of digital data, on the other hand, the interface unit 6a serves as a receiver circuit. For example, a camera that uses such an interface as USB, IEEE 1394 or Ethernet (registered trademark) transfers the digital data. Therefore, the interface unit works as a receiver circuit for the respective communications. The data storage unit 6b works to temporarily store the data until the data transfer timing is taken, and comprises, for example, an FIFO buffer. In order to display the image taken by the camera 31 and to adjust the direction and focus of the camera, there is often provided an image display unit, which is not shown. The image signal output unit 6c outputs an image signal to the image display unit, which is not shown. Further, a dedicated image display unit is often omitted by displaying an image for adjustment on the teaching operator panel, which is not shown.

The CCD camera 31 is attached to, for example, an end of the robot hand, which is not shown, to measure a particular position of the object work that serves as a teach point of the operation program. For example, if the machining system using the robot is to deburr the object work, the particular position to be measured is a portion forming burr along the ridges of the object work. As the CCD camera 31, there can be arbitrarily used a three-dimensional camera or a two-dimensional camera. When the three-dimensional camera is used, the position forming the burr is photographed based on the principle of a trigonometrical survey. The image data that are taken in are processed by the processor 23A to calculate the burring position of the object work. The robot having such an image-processing function has been put into practice as an intelligent robot.

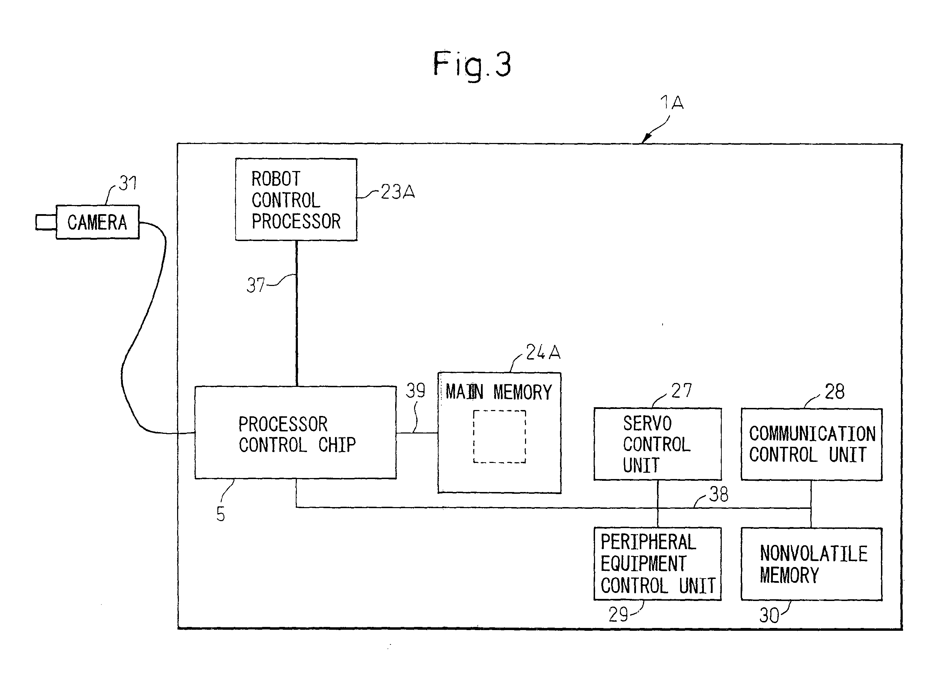

Fig. 3 illustrates a modified example of the robot controller 1 of Fig. 1. This modified example is different from the above embodiment with respect that the main memory 24A is connected to the processor control chip 5 through a memory bus 39. In this constitution, too, the image data picked up by the CCD camera 31 are transferred to the main memory 24A at high speeds without hindering the transfer of data through the second data bus. The constitution in other respects is the same as that of the above embodiment and is not described here again.

According to this embodiment as described above, the image data picked up by the CCD camera 31 are transferred to the main memory 24A at a high speed through the high-speed CPU external bus 37 or the memory bus 39, preventing the transfer of robot control signals from being hindered by the image data. Therefore, it is possible to realize an intelligent robot controller for processing data from various sensors at a decreased cost without decreasing the performance of the robot controller.

The present invention is not limited to the above embodiment only, but can be put into practice by being modified in a variety of ways without departing from the spirit and scope of the invention. For example, a force sensor may be used in place of the CCD camera 31 of this embodiment. As the force sensor, there is used, for example, a six-axis force sensor having a distortion gauge and incorporating a plurality of bridge circuits driven by AC power from an oscillator. The force sensor is provided between an end of the arm or the arm and the hand of the robot body, making it possible to assemble the object work in a flexible motion.

In this embodiment, further, the CCD camera 31 is directly connected to the processor control chip 5. It is, however, also allowable to connect the CCD camera 31 to the processor control chip through a camera interface unit which is provided separately from the processor control chip, without imposing any limitation on the connection between the CCD camera 31 and the processor control chip 5.

Though the invention was described above in connection with a preferred embodiment, people skilled in the art will easily understand that a variety of modifications and changes can be made without departing from the scope of claims described below.

## Claims

1. A robot controller comprising:
a processor (23A) for controlling the robot and for processing the environmental condition data representing the environmental conditions for said robot;
a memory (24A) accessible by said processor (23A);
a writing unit for executing a function of writing said environmental condition into said memory (24A);
a first data bus (37) connected to said memory (24A); and
a second data bus (38) having a transfer rate lower than that of said first data bus (37) and for transferring the control data used for controlling said robot;
**characterized in that** said writing unit writes said environmental condition data into said memory (24A) through said first data bus (37), not through said second data bus (38).

2. A robot controller (1) according to claim 1, wherein said writing unit is a processor control chip (5) which is connected to said processor (23A) through said first data bus (37).

3. A robot controller (1) according to claim 1 or 2, wherein said control data include servo control data.

4. A robot controller (1) according to claim 1 or 2, wherein said control data include peripheral equipment control data.

5. A robot controller (1) according to claim 1 or 2, wherein said environmental condition data are image data picked up by a camera (31).

6. A robot controller (1) according to claim 1 or 2, wherein said environmental condition data are the data output from a force sensor.
